# FASCICULE DE BREVET EUROPEEN

(11) **EP 1 093 978 B1**
(45) Date de publication et mention de la délivrance du brevet: **26.03.2008**
(21) Numéro de dépôt: 99402614.4
(22) Date de dépôt: 22.10.1999
(51) Int. Cl.: B60R 21/20

(54) **Dispositif de fixation d'une garniture sur un montant de baie de véhicule automobile**
Verkleidung-Befestigungsvorrichtung an einer Kraftfahrzeugsäule
Trimming attachment device on a vehicle pillar

(43) Date de publication de la demande: 25.04.2001
(73) Titulaire: RENAULT S.A.S., 92100 Boulogne Billancourt (FR)
(72) Inventeur: Ponceau, Philippe, 78610 Le Perray en Yvelines (FR)

(56) Documents cités:
- EP-A- 0 795 445
- EP-A- 0 812 739
- EP-A- 0 855 316
- DE-A- 19 542 436
- DE-A- 19 622 231

## Description

La présente invention est relative à un dispositif de fixation d'une garniture sur un montant de baie de véhicule automobile.

Depuis quelques années, on améliore la sécurité des véhicules automobiles en implantant à l'intérieur des habitacles des éléments gonflables de protection des passagers.

Selon une évolution récente, on utilise des éléments gonflables de protection latérale, couramment appelés rideaux gonflables, logés en partie derrière les garnitures de montants de baies et au-dessus de l'habillage de pavillon.

La publication DE_A_196 22 231, qui comporte les caractéristiques du préambule de la revendication 1, décrit un habillage de montant de baie pouvant s'escamoter afin de laisser le rideau gonflable se déployer lors d'un choc.

Lors du déploiement de ces rideaux gonflables, les garnitures de montants de baies ont tendance à être éjectées vers l'intérieur de l'habitacle, au risque de blesser les passagers.

Pour éviter cet inconvénient, on a mis au point divers systèmes anti-éjection, ayant tous ceci en commun qu'ils sont relativement complexes et coûteux à fabriquer.

La présente invention a pour but de fournir un dispositif de fixation d'une garniture sur un montant de baie permettant de s'affranchir de façon simple et économique du risque d'éjection lors du déploiement d'un rideau gonflable.

On atteint ce but de l'invention, ainsi que d'autres qui apparaîtront à la lecture de la description qui va suivre, avec un dispositif de fixation d'une garniture sur un montant de baie de véhicule automobile, selon la revendication 1, et cette garniture étant conformée pour loger au moins une partie d'un ensemble de rideau gonflable, remarquable en ce qu'il comprend une pluralité d'éléments de support fixés sur ledit montant et reliés à ladite garniture par des organes d'articulation et par des organes de verrouillage agencés de manière que lors de son déploiement, ledit rideau puisse débrayer lesdits organes de verrouillage et faire pivoter ladite garniture sur lesdits éléments de support autour desdits organes d'articulation.

Suivant d'autres caractéristiques de l'invention:
- lesdits organes d'articulation comprennent des crochets et des contre-crochets engagés mutuellement,
- des paires de lames élastiques maintiennent lesdits crochets et contre-crochets en contact,
- lesdits crochets et lesdites paires de lames élastiques sont situés sur lesdits éléments de support, et lesdits contre-crochets sont situés sur ladite garniture,
- lesdits organes de verrouillage comprennent des doigts élastiques et des paires de butées bloquant ces doigts,
- lesdits doigts élastiques sont situés sur lesdits éléments de support, et lesdites paires de butées sont situées sur ladite garniture,
- lesdits doigts élastiques sont espacés par rapport audit montant, de manière à permettre de loger au moins une partie dudit ensemble de rideau gonflable,
- lesdits éléments de support et ladite garniture sont séparés par un espace permettant de loger divers organes tels que des faisceaux de câbles ou des tuyaux,
- lesdits éléments de support comportent, sur leur face opposée audit montant, des cloisons définissant des compartiments pouvant recevoir lesdits divers organes,
- lesdits éléments de support sont fixés par clipsage sur ledit montant,
- lesdits éléments de support et ladite garniture munis de leurs organes d'articulation et de verrouillage respectifs forment chacun(e) une seule pièce obtenue par moulage.

Grâce à ces caractéristiques, on obtient, avec un nombre limité de pièces, un dispositif de fixation dans lequel le déploiement du rideau a pour effet de faire tourner la garniture autour du montant au lieu de l'éjecter vers l'intérieur de l'habitacle.

Par ailleurs, comme on le verra par la suite, ce dispositif rend très aisées les opérations de montage/démontage de la garniture.

D'autres caractéristiques et avantages de la présente invention apparaîtront à la lecture de la description qui va suivre et à l'examen du dessin annexé, dans lequel:
- la figure 1 est une vue en coupe longitudinale d'un véhicule automobile comprenant une garniture de montant de pare-brise fixée avec le dispositif selon l'invention, le rideau gonflable correspondant étant représenté en position déployée,
- la figure 2 est une vue en perspective partielle de l'intérieur de l'habitacle du véhicule automobile de la figure 1, sur laquelle on voit notamment la garniture fixée avec le dispositif selon l'invention et le rideau gonflable en position repliée,
- la figure 3 est analogue à la figure 2, à ceci près que le rideau gonflable est représenté en position déployée,
- la figure 4 est une vue en coupe selon le plan IV de la figure 2,
- la figure 5 est une vue en coupe selon le plan V de la figure 3.

Dans ce qui suit, on va décrire le dispositif selon l'invention dans le cas où il permet de fixer une garniture de montant de pare-brise de véhicule automobile, car il se trouve qu'il est particulièrement adapté à cette application.

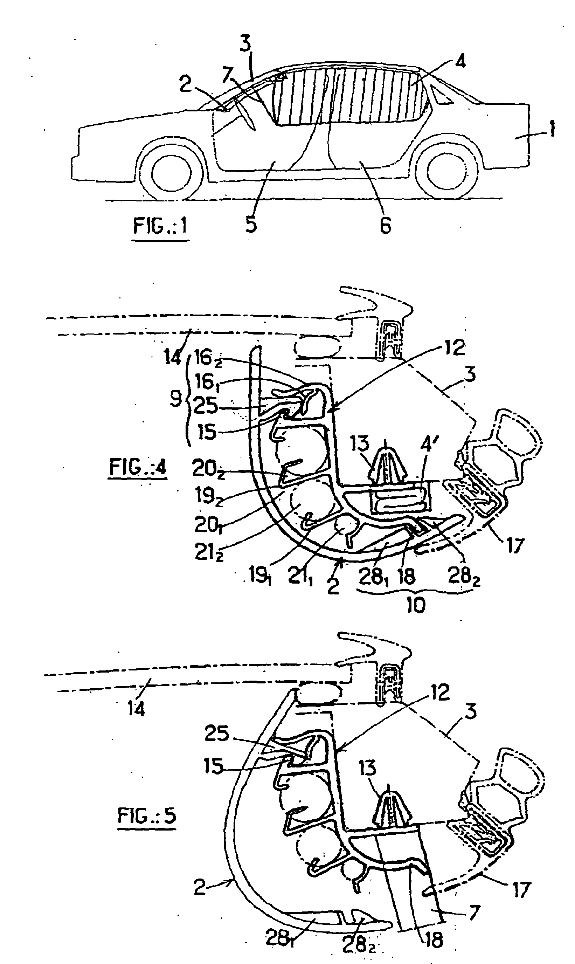

On se reporte à présent à la figure 1, sur laquelle on peut voir un véhicule 1 comprenant une garniture 2 fixée sur un montant de pare-brise 3 avec le dispositif selon l'invention.

Sur cette figure, un rideau gonflable 4 est représenté en position déployée. Ce rideau s'étend sur les parties supérieures des portières avant 5 et arrière 6 du véhicule 1, et il est destiné à protéger latéralement les passagers en cas d'accident.

Une sangle de retenue 7 interposée entre le montant 3 et le rideau 4 permet de maintenir ce dernier en place.

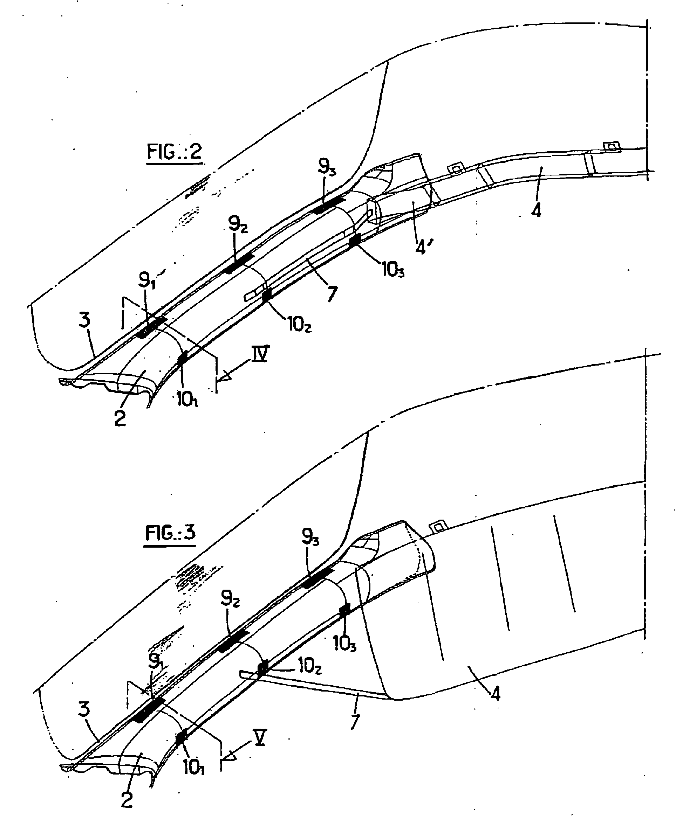

On se reporte à présent à la figure 2, sur laquelle on voit le rideau 4 en position repliée

Une partie 4' de ce rideau ainsi que la sangle 7 sont logées entre la garniture 2 et le montant de pare-brise 3.

De manière caractéristique selon l'invention, la garniture 2 est reliée au montant 3 par des moyens comprenant des organes d'articulation 9₁, 9₂, 9₃ et des organes de verrouillage 10₁, 10₂, 10₃ répartis sur sa longueur.

On se reporte à présent à la figure 3, sur laquelle on a représenté le rideau 4 en position déployée.

Lorsque le rideau se trouve dans cette position, la sangle 7 est tendue, les organes de verrouillage 10₁, 10₂, 10₃ sont débrayés, la garniture 2 est retenue uniquement par les organes d'articulation 9₁, 9₂, 9₃, et elle est écartée par rapport à sa position normale (représentée en pointillés).

On se reporte à présent aux figures 4 et 5 sur lesquelles on peut voir certains détails correspondant respectivement aux figures 2 et 3.

Ces figures vont notamment permettre de découvrir la structure des organes d'articulation 9₁, 9₂, 9₃ et des organes de verrouillage 10₁, 10₂, 10₃.

Comme on peut le voir sur la figure 4, le dispositif de fixation selon l'invention comprend une pluralité d'éléments de support 12 (dont un seul est visible sur la figure 4) fixés en certains points du montant 3, de préférence par clipsage grâce à des clips 13.

Chacun de ces éléments de support comprend, à son extrémité placée à proximité du pare-brise 14, un crochet 15 surmonté d'une paire de lames élastiques 16₁, 16₂ et, à son extrémité placée à proximité du joint de portière 17, un doigt élastique 18.

Ce doigt élastique est espacé par rapport au montant 3, de manière à permettre de loger la sangle 7 (non représentée) et la partie 4' du rideau 4 en position repliée.

Par ailleurs, chaque élément de support 12 comprend, sur sa face opposée au montant 3, une pluralité de cloisons 19₁, 19₂ définissant des compartiments 20₁, 20₂ pouvant recevoir des organes tels que des faisceaux de câbles ou des tuyaux 21₁, 21₂.

La garniture 2 comprend des contre-crochets 25 (dont un seul est visible sur la figure 4) qui coopèrent avec les crochets 15 et qui sont maintenus en contact avec ces derniers par les paires de lames élastiques 16₁, 16₂.

Par ailleurs, la garniture 2 comprend des paires de butées 28₁, 28₂ entre lesquelles les doigts élastiques 18 se trouvent bloqués.

Les crochets 15, les paires de lames élastiques 16₁, 16₂ et les contre-crochets 25 constituent les organes d'articulation 9₁, 9₂, 9₃.

Les doigts élastiques 18 et les paires de butées 28₁, 28₂ constituent les organes de verrouillage 10₁, 10₂, 10₃.

De manière avantageuse, le joint de portière 17 recouvre partiellement la garniture 2.

De manière préférée, le clip 13, le crochet 15, les deux lames élastiques 16₁, 16₂, le doigt élastique 18 et les cloisons 19₁, 19₂ de chaque élément de support 12 sont formés dans une seule et même pièce d'un matériau plastique semi-rigide, obtenue par exemple par moulage.

De même, la garniture 2, les contre-crochets 25 et les paires de butées 28₁, 28₂ sont formés dans une seule et même pièce d'un matériau plastique rigide.

La figure 5 représente le dispositif de fixation selon l'invention lorsque le rideau gonflable (non représenté) est déployé et donc lorsque la sangle 7 est tendue.

Comme on peut le voir sur cette figure, les contre-crochets 25 demeurent engagés dans les crochets 15, mais les paires de butées 28₁, 28₂ sont écartées des doigts élastiques 18, ouvrant ainsi un passage pour la sangle 7 et le rideau gonflable.

Le fonctionnement et les avantages de la garniture selon l'invention découlent directement de la description qui précède.

Lorsque le rideau gonflable 4 se déploie, il pousse les doigts élastiques 18 et la garniture 2 vers l'extérieur, ce qui a pour effet de débrayer le verrouillage formé par la coopération de ces organes.

Au lieu d'être éjectée vers l'extérieur, la garniture 2 tourne alors autour des crochets 15 pour laisser passer le rideau 4 et la sangle 7.

Les paires de lames élastiques 16₁, 16₂ évitent l'échappement des contre-crochets 25 sous l'effet du choc causé par le déploiement du rideau 4.

Comme on peut le comprendre à présent, le dispositif de fixation selon l'invention permet de supprimer les risques d'éjection de la garniture 2, et ce avec un nombre limité de pièces peu coûteuses à fabriquer dans le cadre d'une production en série.

On remarquera également que ce dispositif de fixation permet de monter et de démonter très facilement la garniture 2. En effet, pour la monter, il suffit d'engager les contre-crochets 25 dans les crochets 15, puis d'amener les doigts élastiques 18 entre les paires de butées 28₁, 28₂, par simple pression sur le bord de cette garniture qui est situé à proximité du joint de portière 17. Pour démonter cette garniture, on effectue ces opérations dans l'ordre inverse.

## Revendications

1. Dispositif de fixation d'une garniture sur un montant de baie (3) de véhicule automobile (1), cette garniture (2) étant conformée pour loger au moins une partie (7, 4') d'un ensemble de rideau gonflable (4),et comporte des organes de verrouillage (18, 28₁, 28₂) et des organes d'articulation (9), comportant chacun un crochet (15) et un contre crochet (25) engagé mutuellement, **caractérisé en ce que** lesdits organes d'articulation comportent une paire de lames élastiques (16₁, 16₂) formant sensiblement un V et dont une lame (16₂) est en appuie contre une face du contre crochet (25) opposée à la face dans laquelle est engagé le crochet (15) et une lame (16₁) est en appuie sur une extrémité terminale du contre crochet (25), lorsque ladite garniture (2) est dans une position de fixation sur ledit montant baie, de manière à éviter l'échappement des contre crochets (25) sous l'effet du choc causé par le déploiement du rideau (4).

2. Dispositif de fixation selon la revendication 1, **caractérisé en ce que** lesdits crochets (15) et lesdites paires de lames élastiques (16₁, 16₂) sont situés sur des éléments de support (12), et **en ce que** lesdits contre-crochets (25) sont situés sur ladite garniture (2).

3. Dispositif de fixation selon l'une quelconques des revendications 1 à 2, **caractérisé en ce que** des organes de verrouillage (18, 28₁, 28₂) comprennent des doigts élastiques et des paires de butées (28₁, 28₂) bloquant ces doigts.

4. Dispositif de fixation selon la revendication 3, **caractérisé en ce que** lesdits doigts élastiques (18) sont situés sur lesdits éléments de support (12), et **en ce que** lesdites paires de butées (28₁, 28₂) sont situées sur ladite garniture (2).

5. Dispositif de fixation selon la revendication 4, **caractérisé en ce que** lesdits doigts élastiques (18) sont espacés par rapport audit montant (3), de manière à permettre de loger au moins une partie dudit ensemble de rideau gonflable (4).

6. Dispositif de fixation selon l'une quelconque des revendications 2 à 5, **caractérisé en ce que** lesdits éléments de support (12) et ladite garniture (2) sont séparés par un espace permettant de loger divers organes tels que des faisceaux de câbles ou des tuyaux (21₁, 21₂).

7. Dispositif de fixation selon la revendication 6, **caractérisé en ce que** lesdits éléments de support (12) comportent, sur leur face opposée audit montant (3), des cloisons (19₁, 19₂) définissant des compartiments (20₁, 20₂) pouvant recevoir lesdits divers organes (21₁, 21₂).

8. Dispositif de fixation selon l'une quelconque des revendications 2 à 7, **caractérisé en ce que** lesdits éléments de support (12) sont fixés par clipsage sur ledit montant (3).

9. Dispositif de fixation selon l'une quelconque des revendications 2 à 8, **caractérisé en ce que** lesdits éléments de support (12) et ladite garniture (2) munis de leurs organes d'articulation (15, 16₁, 16₂, 25) et de verrouillage (18; 28₁, 28₂) respectifs forment chacun(e) une seule pièce obtenue par moulage.

10. Dispositif de fixation selon l'une quelconque des revendications précédentes, **caractérisé en ce que** la garniture (2) se prolonge au-delà de l'organe d'articulation (15, 16₁, 16₂, 25) afin de limiter le déplacement de la garniture (2) lors du déploiement du rideau gonflable (4).

## Claims

1. Device for attaching a trim to a pillar (3) flanking an opening of a motor vehicle (1), this trim (2) being shaped to house at least part (7, 4') of an airbag assembly (4), and comprises locking members (18, 28₁, 28₂) and articulating members (9) each comprising a hook (15) and a counter-hook (25) engaged with one another, **characterized in that** the said articulating members comprise a pair of elastic leaves (16₁, 16₂) more or less forming a V and in which one leaf (16₂) presses against one face of the counter-hook (25) which is the opposite face to the one in which the hook (15) is engaged, and one leaf (16₁) presses against a terminal end of the counter-hook (25), when the said trim (2) is fastened in position on the said pillar flanking the opening, so as to prevent the counter-hooks (25) from disengaging under the effect of the impact caused by deployment of the airbag (4).

2. Attachment device according to Claim 1, **characterized in that** the said hooks (15) and the said pairs of elastic leaves (16₁, 16₂) are located on support elements (12), and **in that** the said counter-hooks (25) are located on the said trim (2).

3. Attachment device according to either one of Claims 1 and 2, **characterized in that** locking members (18, 28₁, 28₂) comprise elastic fingers and pairs of buffers (28₁, 28₂) immobilizing these fingers.

4. Attachment device according to Claim 3, **characterized in that** the said elastic fingers (18) are located on the said support elements (12), and **in that** the said pairs of buffers (28₁, 28₂) are located on the said trim (2).

5. Attachment device according to Claim 4, **characterized in that** the said elastic fingers (18) are spaced away from the said pillar (3) so as to allow at least part of the said airbag assembly (4) to be accommodated.

6. Attachment device according to any one of Claims 2 to 5, **characterized in that** the said support elements (12) and the said trim (2) are separated by a space able to accommodate various components such as bundles of cables or pipes (21₁, 21₂).

7. Attachment device according to Claim 6, **characterized in that** the said support elements (12) comprise, on their face facing away from the said pillar (3), partitions (19₁, 19₂) defining compartments (20₁, 20₂) able to accept the said various components (21₁, 21₂).

8. Attachment device according to any one of Claims 2 to 7, **characterized in that** the said support elements (12) are attached to the said pillar (3) by clip-fastening.

9. Attachment device according to any one of Claims 2 to 8, **characterized in that** the said support elements (12) and the said trim (2), each equipped with their own articulating members (15, 16₁, 16₂, 25) and locking members (18, 28₁, 28₂) each form a single component formed by moulding.

10. Attachment device according to any one of the preceding claims, **characterized in that** the trim (2) extends beyond the articulating member (15, 16₁, 16₂, 25) so as to limit the displacement of the trim (2) as the airbag (4) deploys.

## Patentansprüche

1. Vorrichtung zur Befestigung einer Verkleidung an einer Säule (3) eines Kraftfahrzeugs (1), wobei diese Verkleidung (2) derart ausgeführt ist, dass sie mindestens einen Teil (7, 4') einer Airbageinheit (4) aufnimmt, und Verriegelungselemente (18, 28₁, 28₂) und Gelenkelemente (9) umfasst, die jeweils einen Haken (15) und einen Gegenhaken (25) aufweisen, die ineinander greifen, **dadurch gekennzeichnet, dass** die Gelenkelemente ein Paar elastischer Blättchen (16₁, 16₂) umfassen, die im Wesentlichen ein V bilden, wobei ein Blättchen (16₂) an einer Fläche des Gegenhakens (25) gegenüber der Seite aufliegt, in der der Haken (15) im Eingriff steht, und ein Blättchen (16₁) auf einem Ende des Gegenhakens (25) aufliegt, wenn sich die Verkleidung (2) in einer Befestigungsposition auf der Säule befindet, um das Austreten der Gegenhaken (25) unter der Wirkung des Stoßes, der durch das Ausfahren des Airbags (4) verursacht wird, zu verhindern.

2. Befestigungsvorrichtung nach Anspruch 1, **dadurch gekennzeichnet, dass** die Haken (15) und die Paare von elastischen Blättchen (16₁, 16₂) auf Stützelementen (12) angeordnet sind, und dass die Gegenhaken (25) auf der Verkleidung (2) angeordnet sind.

3. Befestigungsvorrichtung nach einem der Ansprüche 1 bis 2, **dadurch gekennzeichnet, dass** Verriegelungselemente (18, 28₁, 28₂) elastische Finger und Anschlagpaare (28₁, 28₂), die diese Finger feststellen, umfassen.

4. Befestigungsvorrichtung nach Anspruch 3, **dadurch gekennzeichnet, dass** die elastischen Finger (18) auf den Stützelementen (12) und die Anschlagpaare (28₁, 28₂) auf der Verkleidung (2) angeordnet sind.

5. Befestigungsvorrichtung nach Anspruch 4, **dadurch gekennzeichnet, dass** die elastischen Finger (18) in einem Abstand zur Säule (3) angeordnet sind, um es zu ermöglichen, zumindest einen Teil der Airbageinheit (4) aufzunehmen.

6. Befestigungsvorrichtung nach einem der Ansprüche 2 bis 5, **dadurch gekennzeichnet, dass** die Stützelemente (12) und die Verkleidung (2) durch einen Raum getrennt sind, der es ermöglicht, verschiedene Elemente, wie beispielsweise Kabelstränge oder Rohre (21₁, 21₂), aufzunehmen.

7. Befestigungsvorrichtung nach Anspruch 6, **dadurch gekennzeichnet, dass** die Stützelemente (12) auf ihrer der Säule (3) gegenüber liegenden Seite Trennwände (19₁, 19₂) aufweisen, die Abteile (20₁, 20₂) definieren, die verschiedene Elemente (21₁, 21₂) aufnehmen können.

8. Befestigungsvorrichtung nach einem der Ansprüche 2 bis 7, **dadurch gekennzeichnet, dass** die Stützelemente (12) durch Clipsen an die Säule (3) montiert sind.

9. Befestigungsvorrichtung nach einem der Ansprüche 2 bis 8, **dadurch gekennzeichnet, dass** die Stützelemente (12) und die Verkleidung (2), die mit ihren jeweiligen Gelenkelementen (15, 16₁, 16₂, 25) und Verriegelungselementen (18, 28₁, 28₂) versehen sind, jeweils ein einziges, durch Formguss hergestelltes Stück bilden.

10. Befestigungsvorrichtung nach einem der vorhergehenden Ansprüche, **dadurch gekennzeichnet, dass** sich die Verkleidung (2) über das Gelenkelement (15, 16₁, 16₂, 25) hinaus verlängert, um die Verschiebung der Verkleidung (2) beim Ausfahren des Airbags (4) zu begrenzen.
